# EUROPEAN PATENT APPLICATION

(11) **EP 3 252 239 A2**
(43) Date of publication of application: **06.12.2017**
(21) Application number: 17168067.1
(22) Date of filing: 25.04.2017
(51) Int. Cl.: E03C 1/05, G01S 17/02, G01S 7/481

(54) **FAUCET APPARATUS**

(30) Priority: 13.05.2016 JP 2016097263
(71) Applicant: TOTO LTD., Kitakyushu-shi Fukuoka 802-8601 (JP)
(72) Inventor: KAREI, Minoru, Kitakyushu-shi, Fukuoka 802-8601 (JP)
(74) Representative: Takeuchi, Maya

(57) **Abstract**

A faucet apparatus including a water discharger, a water supply path, an opening/closing valve, a transmitter, a receiver, and a controller, where the water discharger has a water discharge port discharging water, the water supply path guides the water from a water supply source to the water discharge port, the opening/closing valve opens and closes the water supply path, the transmitter transmits an optical signal, the receiver receives a reflected signal of the optical signal and outputs a received signal corresponding to the reflected signal, the controller detects an existence or absence of an object based on the received signal and controls opening and closing of the opening/closing valve according to a detection result of the object.

## Description

### FIELD

Embodiments described herein relate generally to faucet apparatus.

### BACKGROUND

There is a faucet apparatus that automatically controls the water discharge and shutoff by using a sensor to detect an object such as a hand of a user, etc., and by operating an opening/closing valve. In the faucet apparatus, for example, an optical signal such as infrared light or the like is transmitted; a reflected signal of the optical signal reflected by the object is received; and the existence of the object is detected and the water discharge is started when the light reception amount of the reflected signal exceeds a prescribed threshold.

In such a faucet apparatus, erroneous water discharge due to the incidence of specularly reflected light is suppressed by providing polarizing plates on the transmitting side and receiving side (e.g., Patent Document 1).

For example, a perpendicular-direction polarizing plate is provided on the transmitting side, and perpendicular-direction linearly polarized light is transmitted as the optical signal; and a horizontal-direction polarizing plate is provided on the receiving side, and the reflected signal of horizontal-direction linearly polarized light is received. In the case where the optical signal is reflected by the hand of the human body, etc., a component of horizontal-direction linearly polarized light also is included in the reflected signal of this case because the reflection is a diffuse reflection. Therefore, the component of the horizontal-direction linearly polarized light passes through the horizontal-direction polarizing plate; and the reflected signal is received. On the other hand, in the case where the optical signal undergoes a specular reflection due to a wash basin, a sink, etc., a reflected signal that substantially includes only the component of the perpendicular-direction linearly polarized light is incident on the horizontal-direction polarizing plate; therefore, the reflected signal is blocked by the polarizing plate; and the reflected signal is not received. Thereby, the erroneous water discharge due to the incidence of the specularly reflected light is suppressed.

However, in principle, the light that passes through the polarizing plate attenuates about 50%. Accordingly, in the configuration in which the polarizing plates are provided on the transmitting side and the receiving side, about 50% is attenuated on the transmitting side; about 50% is further attenuated on the receiving side; and a total attenuation undesirably occurs to about 25%. In other words, by providing the two polarizing plates, about 75% of the intensity of the optical signal is lost. Therefore, to obtain a light reception amount that is about the same as the case where the polarizing plates are not used, it is necessary to set the intensity (the light emission power) of the light when transmitting to be about 4 times. To increase the intensity of the light, for example, it is necessary to increase the current supplied to the light-projecting element, which undesirably may cause an increase of the power consumption. In the faucet apparatus, there are many cases where the detecting of the object is performed constantly while being connected to the power supply; and power consumption reduction and the suppression of the erroneous water discharge are desirable.

Therefore, in a faucet apparatus that automatically controls the water discharge and shutoff by detecting an object, a detecting method of the object that has excellent power consumption reduction while suppressing erroneous water discharge due to specular reflections is desirable.

### SUMMARY

According to one embodiment, a faucet apparatus including a water discharger, a water supply path, an opening/closing valve, a transmitter, a receiver, and a controller, where the water discharger has a water discharge port discharging water, the water supply path guides the water from a water supply source to the water discharge port, the opening/closing valve opens and closes the water supply path, the transmitter transmits an optical signal, the receiver receives a reflected signal of the optical signal and outputs a received signal corresponding to the reflected signal, the controller detects an existence or absence of an object based on the received signal and controls opening and closing of the opening/closing valve according to a detection result of the object, the transmitter includes a light-projecting element and a polarization conversion element, the light-projecting element projects non-polarized light, the polarization conversion element converts the non-polarized light projected from the light-projecting element into light of a first polarization, the optical signal transmitted by the transmitter is of the light of the first polarization, the receiver includes a polarizing member and a light receiving element, the polarizing member blocks light of a second polarization of the light included in the reflected signal and transmits light of a third polarization of the light included in the reflected signal, the light of the second polarization is formed by the light of the first polarization undergoing a specular reflection, the third polarization is different from the second polarization, the light receiving element receives the light of the third polarization passing through the polarizing member, and the receiver outputs the received signal corresponding to a light reception amount of the light receiving element to the controller.

### BRIEF DESCRIPTION OF THE DRAWINGS

FIG. 1 is a descriptive view illustrating a faucet apparatus according to a first embodiment;
FIG. 2A and FIG. 2B are block diagrams illustrating a portion of the faucet apparatus according to the first embodiment;
FIG. 3 is a descriptive view illustrating an example of the polarization conversion element;
FIG. 4 is a flowchart illustrating the operations of the faucet apparatus according to the first embodiment;
FIG. 5A and FIG. 5B are block diagrams illustrating a portion of a faucet apparatus according to the second embodiment;
FIG. 6 is a flowchart illustrating the operations of the faucet apparatus according to the second embodiment;
FIG. 7A and FIG. 7B are block diagrams illustrating a portion of a faucet apparatus according to a third embodiment;
FIG. 8A and FIG. 8B are block diagrams illustrating a modification of the faucet apparatus according to the first embodiment;
FIG. 9A and FIG. 9B are block diagrams illustrating a modification of the faucet apparatus according to the second embodiment; and
FIG. 10A and FIG. 10B are block diagrams illustrating a modification of the faucet apparatus according to the third embodiment.

### DETAILED DESCRIPTION

A first invention is a faucet apparatus including a water discharger, a water supply path, an opening/closing valve, a transmitter, a receiver, and a controller, where the water discharger has a water discharge port discharging water, the water supply path guides the water from a water supply source to the water discharge port, the opening/closing valve opens and closes the water supply path, the transmitter transmits an optical signal, the receiver receives a reflected signal of the optical signal and outputs a received signal corresponding to the reflected signal, the controller detects an existence or absence of an object based on the received signal and controls opening and closing of the opening/closing valve according to a detection result of the object, the transmitter includes a light-projecting element and a polarization conversion element, the light-projecting element projects non-polarized light, the polarization conversion element converts the non-polarized light projected from the light-projecting element into light of a first polarization, the optical signal transmitted by the transmitter is of the light of the first polarization, the receiver includes a polarizing member and a light receiving element, the polarizing member blocks light of a second polarization of the light included in the reflected signal and transmits light of a third polarization of the light included in the reflected signal, the light of the second polarization is formed by the light of the first polarization undergoing a specular reflection, the third polarization is different from the second polarization, the light receiving element receives the light of the third polarization passing through the polarizing member, and the receiver outputs the received signal corresponding to a light reception amount of the light receiving element to the controller.

According to the faucet apparatus, the non-polarized light is converted into the light of the first polarization by the polarization conversion element; and the optical signal of the light of the first polarization is transmitted from the transmitter. In the polarization conversion element, light of a polarization that is different from the first polarization included in the non-polarized light can be converted into the light of the first polarization and output. Thereby, compared to the case where a polarizing plate that transmits only light of one polarization is used, the attenuation of the light due to the transmission can be suppressed; and the light reaching the object and the light reception amount of the light in the receiver can be increased. In other words, compared to the case where two polarizing plates are used, the intensity of the light necessary when transmitting is reduced; and the increase of the power consumption can be suppressed.

Also, in the case where the optical signal undergoes a specular reflection, the reflected signal is light of the second polarization. In such a case, the incidence of the light of the specular reflection on the light receiving element also can be suppressed by the polarizing member blocking the light of the second polarization. Accordingly, a faucet apparatus that is excellent for power consumption reduction can be provided while suppressing erroneous water discharge due to the specular reflection.

A second invention is a faucet apparatus including a water discharger, a water supply path, an opening/closing valve, a transmitter, a receiver, and a controller, where the water discharger has a water discharge port discharging water, the water supply path guides the water from a water supply source to the water discharge port, the opening/closing valve opens and closes the water supply path, the transmitter transmits an optical signal, the receiver receives a reflected signal of the optical signal and outputs a received signal corresponding to the reflected signal, the controller detects an existence or absence of an object based on the received signal and controls the opening and closing of the opening/closing valve according to a detection result of the object, the transmitter includes a light-projecting element and a polarizing member, the light-projecting element projects non-polarized light, the polarizing member transmits light of a first polarization included in the non-polarized light and blocks light of a polarization that is different from the first polarization, the optical signal transmitted by the transmitter is of the light of the first polarization, the receiver includes a beam splitter, a first light receiving element, and a second light receiving element, the beam splitter splits the light included in the reflected signal into light of a second polarization and light of a third polarization, the light of the second polarization is formed by the light of the first polarization undergoing a specular reflection, the light of the third polarization is different from the light of the second polarization, the first light receiving element receives the light of the second polarization split by the beam splitter, the second light receiving element receives the light of the third polarization split by the beam splitter, and the receiver outputs the received signal corresponding to a light reception amount of the first light receiving element and a light reception amount of the second light receiving element to the controller.

According to the faucet apparatus, in the receiver, the first light receiving element receives the light of the second polarization, and the second light receiving element receives the light of the third polarization; and the controller detects the existence or absence of the object based on the light reception amount of the first light receiving element and the light reception amount of the second light receiving element. Thereby, compared to the case where a polarizing plate transmitting only light of one polarization is used and the light of the one polarization is received by one light receiving element, more of the light undergoing the diffuse reflection due to the object can be received. Therefore, compared to the case where two polarizing plates are used, the intensity of the light necessary when transmitting is reduced; and the increase of the power consumption can be suppressed.

Also, in the case where the optical signal undergoes a specular reflection, the reflected signal is light of the second polarization. Therefore, the detecting of the specular reflection also can be performed based on the light reception amount of the first light receiving element. Accordingly, a faucet apparatus that is excellent for power consumption reduction can be provided while suppressing the erroneous water discharge due to the specular reflection.

A third invention is a faucet apparatus including a water discharger, a water supply path, an opening/closing valve, a transmitter, a receiver, and a controller, where the water discharger has a water discharge port discharging water, the water supply path guides the water from a water supply source to the water discharge port, the opening/closing valve opens and closes the water supply path, the transmitter transmits an optical signal, the receiver receives a reflected signal of the optical signal and outputs a received signal corresponding to the reflected signal, the controller detects an existence or absence of an object based on the received signal and controls the opening and closing of the opening/closing valve according to a detection result of the object, the transmitter includes a light-projecting element and a polarization conversion element, the light-projecting element projects non-polarized light, the polarization conversion element converts the non-polarized light projected from the light-projecting element into light of a first polarization, the optical signal transmitted by the transmitter is of the light of the first polarization, the receiver includes a beam splitter, a first light receiving element, and a second light receiving element, the beam splitter splits the light included in the reflected signal into light of a second polarization and light of a third polarization, the light of the second polarization is formed by the light of the first polarization undergoing a specular reflection, the third polarization is different from the second polarization, the first light receiving element receives the light of the second polarization split by the beam splitter, the second light receiving element receives the light of the third polarization split by the beam splitter, and the receiver outputs the received signal corresponding to the light reception amount of the first light receiving element and the light reception amount of the second light receiving element to the controller.

According to the faucet apparatus, the non-polarized light is converted into the light of the first polarization by the polarization conversion element; and the optical signal of the light of the first polarization is transmitted from the transmitter. In the polarization conversion element, light of a polarization that is different from the first polarization included in the non-polarized light can be converted into the light of the first polarization and output. Thereby, compared to the case where a polarizing plate transmitting only light of one polarization is used, the attenuation of the light due to the transmission can be suppressed; and the light reaching the object and the light reception amount of the light in the receiver can be increased.

Also, in the receiver, the first light receiving element receives the light of the second polarization, and the second light receiving element receives the light of the third polarization; and the controller detects the existence or absence of the object based on the light reception amount of the first light receiving element and the light reception amount of the second light receiving element. Thereby, compared to the case where a polarizing plate transmitting only light of one polarization is used and the light of the one polarization is received by one light receiving element, more of the light undergoing the diffuse reflection due to the object can be received. Therefore, compared to the case where two polarizing plates are used, the intensity of the light necessary when transmitting is reduced; and the increase of the power consumption can be suppressed.

Further, in the case where the optical signal undergoes a specular reflection, the reflected signal is the light of the second polarization. Therefore, the detecting of the specular reflection also can be performed based on the light reception amount of the first light receiving element. Accordingly, a faucet apparatus that is excellent for power consumption reduction can be provided while suppressing the erroneous water discharge due to the specular reflection.

A fourth invention is the faucet apparatus of the second or third invention in which the first light receiving element and the second light receiving element are formed as one unit.

According to the faucet apparatus, the number of parts can be low. For example, the faucet apparatus can be downsized further.

A fifth invention is a faucet apparatus of the first invention in which the controller performs the detecting of the existence or absence of the object by using only the component of the third polarization without using the component of the second polarization.

According to the faucet apparatus, the detecting of the existence or absence of the object can be performed by a simple configuration while appropriately suppressing the erroneous water discharge due to the specular reflection.

A sixth invention is the faucet apparatus of any one of the second to fourth inventions in which the controller performs the detecting of the existence or absence of the object based on at least one of the light reception amount of the first light receiving element or the light reception amount of the second light receiving element in the case where the light reception amount of the second light receiving element is not less than a prescribed threshold.

According to the faucet apparatus, the existence or absence of the object can be detected appropriately using the diffuse reflection while suppressing the erroneous water discharge due to the specular reflection.

A seventh invention is the faucet apparatus of any one of the second to fourth inventions in which the controller detects the reception of the specularly reflected light in the case where the light reception amount of the first light receiving element is not less than a first threshold and the light reception amount of the second light receiving element is less than a second threshold.

According to the faucet apparatus, the specular reflection can be detected; and the execution of various safety operations such as a water shutoff operation, an external alarm, etc., are possible. Thereby, the erroneous water discharge due to the specular reflection can be suppressed more appropriately.

Embodiments will now be described with reference to the drawings. Similar components in the drawings are marked with the same reference numerals; and a detailed description is omitted as appropriate.

### First embodiment

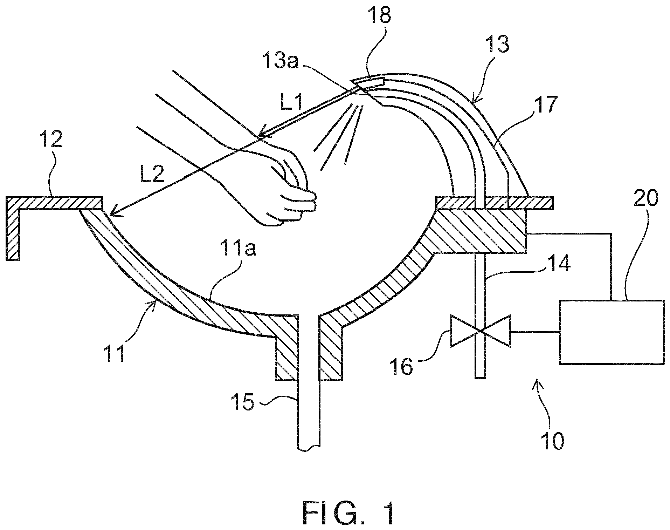

FIG. 1 is a descriptive view illustrating a faucet apparatus according to a first embodiment.

As illustrated in FIG. 1, the faucet apparatus 10 performs automatic water discharge and shutoff by detecting an object (a human body, an object, etc.) and performs the water discharge and shutoff for a wash basin 11 provided in a washstand.

The wash basin 11 is provided in the upper surface of a washing counter 12. A faucet 13 (a water discharger) that includes a spout for discharging water toward a bowl surface 11a of the wash basin 11 is provided on the washing counter 12. The faucet 13 has a water discharge port 13a that discharges the water and is provided so that the water that is discharged from the water discharge port 13 a is discharged inside the bowl surface 11a of the wash basin 11.

The water that the faucet 13 discharges from the water discharge port 13a is supplied by a water supply path 14. The water supply path 14 guides the water supplied from a water supply source such as a service-water pipe, etc., toward the water discharge port 13a. A drainage water path 15 is connected to the wash basin 11. The drainage water path 15 drains the water discharged from the water discharge port 13a into the bowl surface 11a of the wash basin 11.

The faucet apparatus 10 includes a solenoid valve 16 (an opening/closing valve), a sensor 18, and a controller 20. The sensor 18 is separated from the controller 20. For example, the sensor 18 is housed in the interior of the faucet 13. For example, the solenoid valve 16 and the controller 20 are housed at the lower side of the washstand. For example, the solenoid valve 16 and the controller 20 are housed inside a cabinet (not illustrated) provided below the washing counter 12.

The sensor 18 and the controller 20 are connected by a connection cable 17. For example, the controller 20 supplies a power supply voltage to the sensor 18 via the connection cable 17 and controls the sensor 18 via the connection cable 17.

The solenoid valve 16 is provided in the water supply path 14 and performs the opening and closing of the water supply path 14. When the solenoid valve 16 opens, the state is switched to a water discharge state in which the water supplied from the water supply path 14 is discharged from the water discharge port 13a; and when the solenoid valve 16 closes, the state is switched to a water shutoff state in which the water supplied from the water supply path 14 is not discharged from the water discharge port 13a.

The solenoid valve 16 is connected to the controller 20; and the controller 20 controls the open/close operation by operating the solenoid valve 16. The solenoid valve 16 is electrically controlled according to a control signal from the controller 20 and performs the opening and closing of the water supply path 14. Thus, the solenoid valve 16 functions as a water supply valve that opens and closes the water supply path 14 of the water discharged from the water discharge port 13a.

The solenoid valve 16 is a self-holding solenoid valve (a latch-type solenoid valve) called a latching solenoid valve, and has an operation (an open operation) from the closed state to the open state when a flow of current is provided to the solenoid coil in one direction, subsequently maintains the open state even when the flow of current to the solenoid coil is turned off, has an operation (a close operation) from the open state to the closed state when a flow of current is provided to the solenoid coil in the other direction, and subsequently maintains the closed state even when the flow of current to the solenoid coil is turned off. The opening and closing of the water supply path 14 is not limited to the solenoid valve 16 and may be performed by another opening/closing valve mechanism that can open and close the water supply path 14 according to the control of the controller 20.

The sensor 18 detects the object (the hand, etc.) approaching the water discharge port 13a. The water discharge target region of the water discharge port 13a is used as the detection region of the sensor 18. The sensor 18 detects the position, movement, etc., of the object such as the human body, etc., by transmitting an optical signal and by receiving a reflected signal reflected from the object that received the transmitted optical signal.

The sensor 18 is, for example, a light sensor using an optical signal of infrared light. The optical signal that is transmitted from the sensor 18 may be, for example, visible light, etc. Hereinbelow, the optical signal is described as infrared light. "Infrared light" is, for example, light of a wavelength of not less than 0.7 µm and not more than 1000 µm.

The sensor 18 is provided in the interior of the faucet 13 proximal to the water discharge port 13a and is disposed to transmit the optical signal toward the user side (in FIG. 1, the left side) of the washstand. Thereby, the sensor 18 makes it possible to detect when a human body approaches the water discharge port 13a, when a hand reaches toward the water discharge port 13a from the human body approaching the water discharge port 13a, etc.

The sensor 18 outputs the received signal indicating the reception result of the reflected signal (the detection result of the object) via the connection cable 17 to the controller 20. The controller 20 detects the existence or absence of the object based on the received signal output from the sensor 18. For example, the controller 20 detects the position, movement, etc., of the object based on the received signal. Then, the controller 20 controls the open/close operation of the solenoid valve 16 based on the detection result. The controller 20 also controls the sensing operation of the sensor 18 by outputting a control signal to the sensor 18.

As described above, the faucet apparatus 10 of the embodiment includes the solenoid valve 16, the sensor 18, and the controller 20; and the open/close operation of the solenoid valve 16 is controlled by controlling the controller 20 based on the received signal of the sensor 18. Thereby, the water discharge is performed according to the detection result of the object (the movement, etc., of the user of the washstand) approaching the water discharge port 13a. The controller 20 performs the water discharge according to the detection of the object and stops the water discharge according to the nondetection of the object. In other words, in the faucet apparatus 10, the water discharge is performed automatically while the hand or the like of the user reaches out to be proximal to the water discharge port 13a.

The sensor 18 is not operated constantly; and the controller 20 performs the control so that the sensing is operated at the necessary timing. Thereby, the power consumption of the sensor 18 can be reduced. For example, the controller 20 reduces the frequency of the sensing operation of the sensor 18 to a level where the user is not inconvenienced. Thereby, the power consumption reduction of the entire faucet apparatus 10 can be realized.

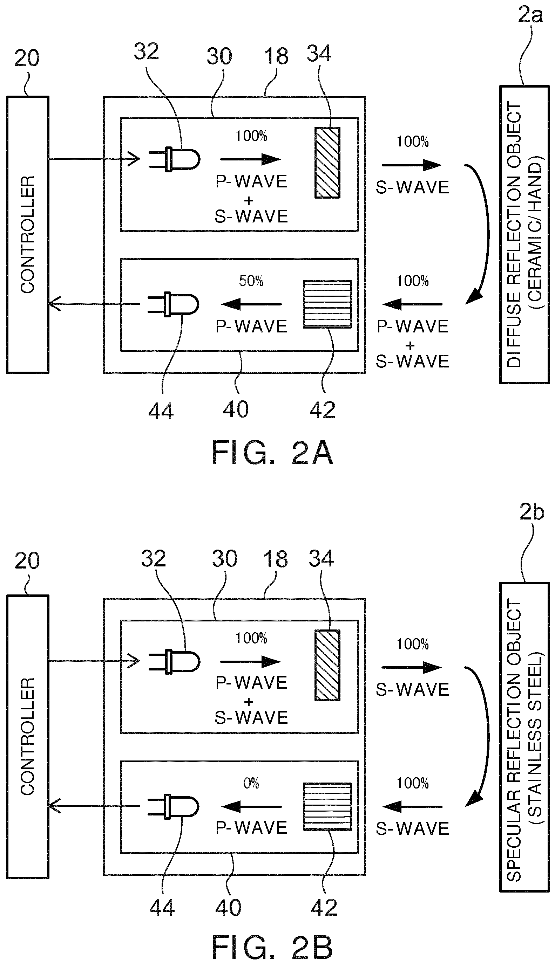

FIG. 2A and FIG. 2B are block diagrams illustrating a portion of the faucet apparatus according to the first embodiment.

As illustrated in FIG. 2A and FIG. 2B, the sensor 18 includes a transmitter 30 and a receiver 40. The transmitter 30 transmits the optical signal toward the detection region of the object. The receiver 40 receives the reflected signal of the optical signal and outputs a received signal corresponding to the reflected signal to the controller 20.

FIG. 2A illustrates the case where the optical signal transmitted from the sensor 18 is reflected by a diffuse reflection object 2a; and FIG. 2B illustrates the case where the optical signal transmitted from the sensor 18 is reflected by a specular reflection object 2b. The diffuse reflection object 2a is, for example, a ceramic wash basin 11, etc. The diffuse reflection object 2a includes the objects such as the hand of the human body, etc. The specular reflection object 2b is, for example, a stainless-steel wash basin 11, etc. Also, there are cases where the faucet apparatus 10 is used in a kitchen set. In such a case, the diffuse reflection object 2a is a tiled kitchen sink, etc.; and the specular reflection object 2b is a stainless-steel kitchen sink, etc.

The transmitter 30 includes a light-projecting element 32 and a polarization conversion element 34. The light-projecting element 32 projects non-polarized light (natural light). For example, the light-projecting element 32 projects non-polarized infrared light. The light-projecting element 32 includes, for example, a light-emitting element such as an LED (Light Emitting Diode), etc. The transmitter 30 is electrically connected to the controller 20; and the projecting of the infrared light and the stopping of projecting of the infrared light from the light-projecting element 32 are switched based on the control of the controller 20.

The polarization conversion element 34 is provided in front of the light-projecting element 32 on the optical axis of the light-projecting element 32. The non-polarized infrared light that is projected from the light-projecting element 32 is incident on the polarization conversion element 34. In other words, the light-projecting element 32 projects the non-polarized infrared light toward the polarization conversion element 34. The polarization conversion element 34 converts the non-polarized infrared light projected from the light-projecting element 32 into infrared light of a first polarization.

The non-polarized infrared light that is projected from the light-projecting element 32 has a component of the first polarization and a component of a polarization that is different from the first polarization. The first polarization is, for example, a perpendicular-direction linear polarization. In such a case, the polarization that is different from the first polarization is, for example, a horizontal-direction linear polarization. The first polarization is not limited to that recited above and may be a linear polarization in any direction. The polarization that is different from the first polarization is not limited to a linear polarization in a direction orthogonal to the first polarization and may be a linear polarization in any polarization direction different from the polarization direction of the first polarization. Hereinbelow, the first polarization is described as a perpendicular-direction linear polarization (an S-wave); and the polarization that is different from the first polarization is described as a horizontal-direction linear polarization (a P-wave). The first polarization is not limited to a linear polarization; and a similar embodiment is possible also for a circular polarization, an elliptical polarization, etc. The polarization that is different from the first polarization is not limited to a linear polarization and may be a polarization in any direction that is different from the first polarization.

For example, the polarization conversion element 34 transmits the S-wave component included in the non-polarized infrared light projected from the light-projecting element 32, and converts the P-wave component included in the non-polarized infrared light projected from the light-projecting element 32 into S-wave infrared light. Then, the polarization conversion element 34 synthesizes the infrared light of the transmitted S-wave component and the S-wave produced by converting the P-wave component. Thereby, the polarization conversion element 34 converts the non-polarized infrared light into S-wave infrared light.

The transmitter 30 transmits the S-wave infrared light converted by the polarization conversion element 34 to the detection region as the optical signal. Thus, the transmitter 30 transmits an optical signal of the S-wave infrared light.

The receiver 40 includes a polarizing plate 42 (a polarizing member) and a light receiving element 44. Of the light included in the reflected signal, the polarizing plate 42 blocks the light of the second polarization formed by the light of the first polarization undergoing the specular reflection, and transmits the light of the third polarization that is different from the second polarization. In the example, the polarizing plate 42 blocks the S-wave component included in the reflected signal and transmits the P-wave component included in the reflected signal. For example, the polarizing plate 42 blocks the S-wave component by at least one of reflection or absorption. To be "blocked" includes not only the state in which the light is not completely transmitted but also the state in which the light is transmitted slightly. To be "blocked" is, for example, the state in which the transmittance of the light is 10% or less. To be "transmitted" is, for example, the state in which the transmittance of the light is 80% or more. The blocking of the S-wave and the transmitting of the P-wave are not limited to the polarizing plate 42 and may be performed by any polarizing member that can perform the blocking of the S-wave and the transmitting of the P-wave.

The light receiving element 44 receives the P-wave infrared light passing through the polarizing plate 42. For example, the light receiving element 44 outputs an electrical signal corresponding to the light reception amount of the P-wave infrared light by performing photoelectric conversion of the P-wave infrared light that is received. The light receiving element 44 includes, for example, a phototransistor or a photodiode that is sensitive to infrared light.

The receiver 40 outputs, to the controller 20, a received signal corresponding to the light reception amount of the light receiving element 44. For example, the receiver 40 outputs, to the controller 20, a received signal corresponding to the electrical signal output from the light receiving element 44.

In diffuse reflection, light polarized in various directions mixes and becomes non-polarized. Therefore, as illustrated in FIG. 2A, in the case where the optical signal is reflected by the diffuse reflection object 2a, the reflected signal includes a P-wave component and an S-wave component. Accordingly, in the case where the optical signal is reflected by the diffuse reflection object 2a, the P-wave component included in the reflected signal passes through the polarizing plate 42 and is incident on the light receiving element 44. Thereby, the detecting of the object such as the hand of the human body, etc., is possible.

The controller 20 determines the light reception amount of the light receiving element 44 based on the received signal and detects that there is an object in the case where the light reception amount of the light receiving element 44 is not less than a prescribed threshold.

As illustrated in FIG. 1, a distance L1 to where the optical signal is reflected by the object is shorter than a distance L2 to where the optical signal is reflected by the wash basin 11. Accordingly, for example, compared to the case of the object, the light reception amount is small for the case where the light receiving element 44 receives the P-wave component of the reflected signal undergoing a diffuse reflection due to a ceramic wash basin 11, etc. Therefore, by appropriately setting the threshold of the light reception amount, only the object is detected; and the erroneous water discharge of the case where the optical signal is undergoing the diffuse reflection due to the ceramic wash basin 11, etc., can be suppressed.

On the other hand, as illustrated in FIG. 2B, the case where the optical signal is reflected by the specular reflection object 2b is a state in which the reflected signal is substantially only the S-wave because the polarization state is maintained. Accordingly, the reflected signal is blocked by the polarizing plate 42. In other words, the reception of the specularly reflected light by the light receiving element 44 is suppressed. Thereby, the erroneous water discharge due to the specularly reflected light also is suppressed.

Thus, it can be considered that the S-wave infrared light included in the reflected signal is the component of the specularly reflected light, and the P-wave infrared light included in the reflected signal is the component of the diffusely reflected light. The controller 20 performs the detecting of the existence or absence of the object using the component included in only the diffusely reflected light (the third polarization) without using the component of the specularly reflected light (the second polarization).

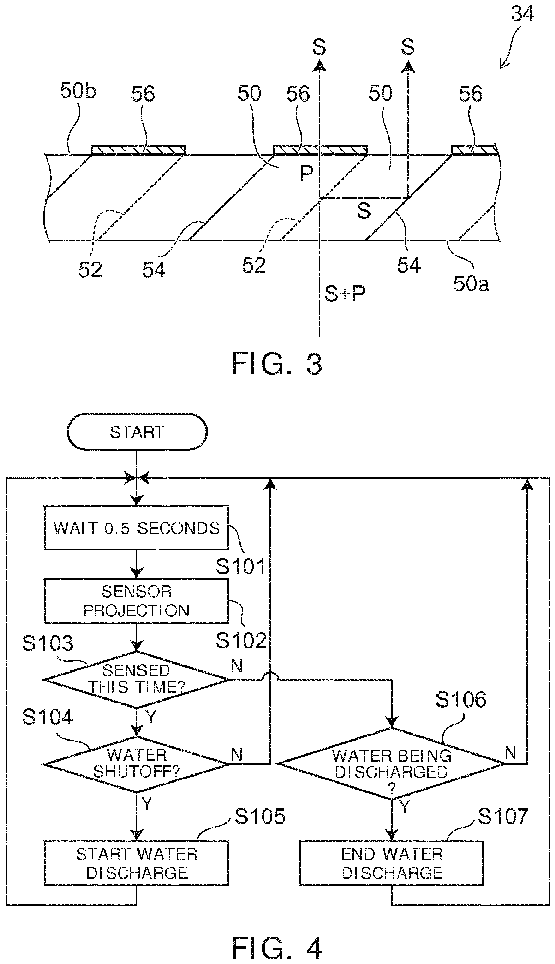

FIG. 3 is a descriptive view illustrating an example of the polarization conversion element.

As illustrated in FIG. 3, the polarization conversion element 34 includes multiple substrate parts 50, multiple polarization-splitting films 52, multiple reflective films 54, and multiple half-wave plates 56.

Each of the substrate parts 50 is formed in a cross-sectionally substantially parallelogram configuration. By being arranged in one direction, the substrate parts 50 form an incident surface 50a having a planar configuration and an emission surface 50b having a planar configuration. The incident surface 50a and the emission surface 50b are substantially parallel to each other. By arranging the substrate parts 50 having the parallelogram configurations, a tilted surface that is tilted substantially 45° with respect to the incident surface 50a and the emission surface 50b is provided between the substrate parts 50. Each of the substrate parts 50 includes a material that is light-transmissive to infrared light; for example, glass and/or a resin exist.

The polarization-splitting films 52 and the reflective films 54 are provided alternately between the substrate parts 50. Accordingly, the polarization-splitting films 52 and the reflective films 54 each are tilted substantially 45° with respect to the incident surface 50a and the emission surface 50b.

Each of the polarization-splitting films 52 reflects the S-wave infrared light and transmits the P-wave infrared light. Each of the reflective films 54 reflects the S-wave infrared light and the P-wave infrared light.

The half-wave plates 56 are provided on the emission surface 50b to respectively oppose the polarization-splitting films 52. Each of the half-wave plates 56 rotates the polarization direction of linearly polarized light substantially 90°. In other words, each of the half-wave plates 56 converts the S-wave into the P-wave and converts the P-wave into the S-wave.

In the polarization conversion element 34 configured as recited above, when the non-polarized light that includes the S-wave component and the P-wave component is incident on each of the polarization-splitting films 52, the S-wave component is reflected by the polarization-splitting film 52, further reflected by the reflective film 54, and emitted from the emission surface 50b. On the other hand, the P-wave component passes through the polarization-splitting film 52, is incident on the half-wave plate 56, is converted into the S-wave, and is emitted.

Thereby, as described above, the non-polarized infrared light is converted into S-wave infrared light in the polarization conversion element 34. The configuration of the polarization conversion element 34 is not limited to that recited above and may be any configuration that can convert the non-polarized infrared light into the S-wave infrared light.

FIG. 4 is a flowchart illustrating the operations of the faucet apparatus according to the first embodiment.

As illustrated in FIG. 4, for example, when the controller 20 of the faucet apparatus 10 starts operating when the power supply is turned on, etc., the controller 20 waits for a prescribed amount of time (step S101 of FIG. 4). The prescribed amount of time is, for example, 0.5 seconds. The standby time is not limited thereto and may be any interval.

After the controller 20 waits for the prescribed amount of time, the controller 20 causes the light-projecting element 32 to project infrared light by supplying a current to the light-projecting element 32 (step S102 of FIG. 4). For example, the controller 20 causes the light-projecting element 32 to project a prescribed number of pulses by supplying the current (the voltage) having a pulse form to the light-projecting element 32.

After the prescribed number of pulse light projections are performed, the controller 20 determines whether or not the light reception amount of the light receiving element 44 is a prescribed threshold or more based on the received signal input from the receiver 40. More specifically, it is determined whether or not the cumulative sum of the light reception amount for the prescribed number of pulse light projections is not less than the threshold.

In the case where the light reception amount is not less than the threshold, the controller 20 determines that the object is detected. In other words, is it is detected that there is an object. In the case where the light reception amount is less than the threshold, the controller 20 determines nondetection. In other words, it is detected that there is no object.

The controller 20 determines whether or not the object is detected in this detection operation for the prescribed number of pulse light projections (step S103 of FIG. 4).

In the case where the object is determined to be detected, the controller 20 determines whether or not the water is shutoff (step S104 of FIG. 4).

In the case where it is determined that the water is shutoff, the controller 20 opens the solenoid valve 16, starts the water discharge, and subsequently returns to the processing of step S101 (step S105 of FIG. 4). On the other hand, in the case where it is determined that the water is being discharged in step S104, the controller 20 returns as-is to the processing of step S101.

In the case where the nondetection is determined in step S103, the controller 20 determines whether or not the water is being discharged (step S106 of FIG. 4).

In the case where it is determined that the water is being discharged, the controller 20 closes the solenoid valve 16, ends the water discharge, and subsequently returns to the processing of step S101 (step S107 of FIG. 4). On the other hand, in the case where it is determined that the water is shutoff in step S106, the controller 20 returns as-is to the processing of step S101.

The controller 20 repeats the processing recited above. Thereby, in the faucet apparatus 10, the water discharge is started automatically from the water discharge port 13a by the user causing the hand, etc., to approach the water discharge port 13a; and the water discharge from the water discharge port 13a is ended by the user moving the hand, etc., away from the water discharge port 13a.

In the faucet apparatus 10 according to the embodiment, the non-polarized light is converted into the S-wave infrared light by the polarization conversion element 34; and the optical signal of the S-wave infrared light is transmitted from the transmitter 30. In the polarization conversion element 34, the P-wave infrared light that is included in the non-polarized light can be converted into the S-wave infrared light and output. Thereby, the attenuation of the light due to the transmission can be suppressed compared to the case where a polarizing plate transmitting only light of one polarization is used; and the light that reaches the object and the light reception amount of the infrared light of the receiver 40 can be increased. In other words, compared to the case where two polarizing plates are used respectively in the transmitter 30 and the receiver 40, the intensity of the light necessary when transmitting is reduced; and the increase of the power consumption can be suppressed.

For example, in the configuration in which the two polarizing plates are used, the intensity of the light attenuates about 50% on the transmitting side, and attenuates about 50% further on the receiving side; and the intensity of the light received by the light receiving element undesirably attenuates to about 25% of that when transmitted. Conversely, in the faucet apparatus 10, the attenuation of the infrared light of the transmitter 30 can be suppressed. For example, the intensity of the infrared light received by the light receiving element 44 can be about 50% of that when transmitted. Compared to the case where substantially the same light reception amount is to be obtained by the light receiving element 44, the power consumption of the light-projecting element 32 can be reduced to about 1/2 of that of the configuration using the two polarizing plates. In other words, the light emission intensity that is necessary at the light-projecting element 32 can be reduced to about 1/2.

In the case where the optical signal undergoes the specular reflection, the reflected signal is the S-wave infrared light. In such a case, the incidence of the infrared light of the specular reflection on the light receiving element 44 can be suppressed by the polarizing plate 42 blocking the S-wave infrared light. Accordingly, a faucet apparatus 10 that is excellent for power consumption reduction can be provided while suppressing the erroneous water discharge due to the specular reflection.

In the faucet apparatus 10 according to the embodiment, the controller 20 performs the detecting of the existence or absence of the object by using the component (the third polarization) included in only the diffusely reflected light without using the component of the specularly reflected light (the second polarization). Thereby, the detecting of the existence or absence of the object can be performed using a simple configuration while appropriately suppressing the erroneous water discharge due to the specular reflection.

### Second embodiment

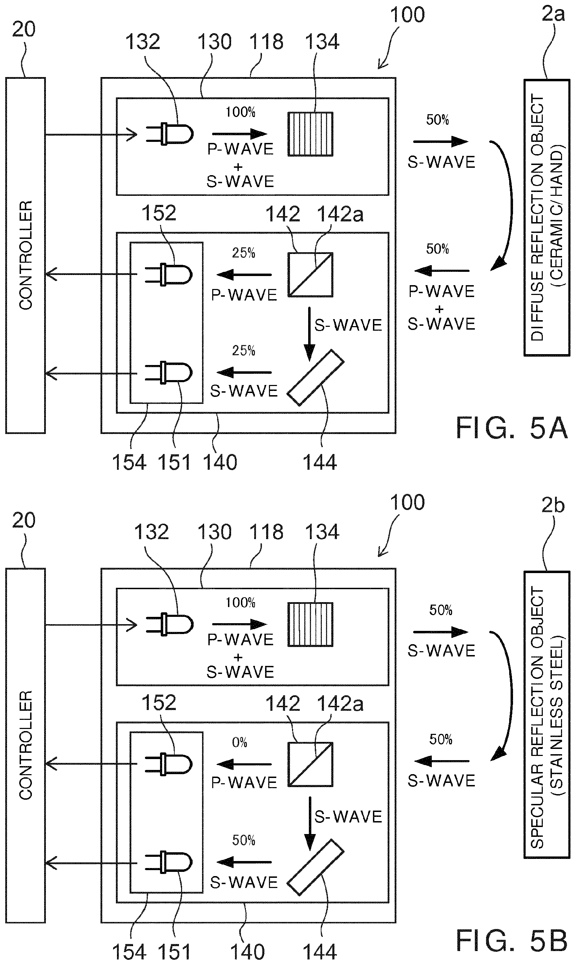

FIG. 5A and FIG. 5B are block diagrams illustrating a portion of a faucet apparatus according to the second embodiment.

As illustrated in FIG. 5A and FIG. 5B, a sensor 118 of the faucet apparatus 100 includes a transmitter 130 and a receiver 140. Components that are substantially the same functionally and configurationally as those of the first embodiment recited above are marked with the same reference numerals; and a detailed description is omitted. Similarly to FIG. 2A and FIG. 2B, FIG. 5A illustrates the case where the optical signal transmitted from the sensor 118 is reflected by the diffuse reflection object 2a; and FIG. 5B illustrates the case where the optical signal transmitted from the sensor 118 is reflected by the specular reflection object 2b.

The transmitter 130 includes a light-projecting element 132 and a polarizing plate 134 (a polarizing member). The light-projecting element 132 is substantially the same as the light-projecting element 32 of the first embodiment recited above; and a detailed description is therefore omitted.

The polarizing plate 134 transmits the light of the first polarization included in the non-polarized light and blocks light of a polarization that is different from the first polarization. In the example, the polarizing plate 134 transmits the S-wave component included in the non-polarized infrared light projected from the light-projecting element 132, and blocks the P-wave component included in the non-polarized infrared light projected from the light-projecting element 132. The transmission of the S-wave and the blocking of the P-wave are not limited to the polarizing plate 134 and may be performed by any polarizing member that can perform the transmission of the S-wave and the blocking of the P-wave.

Thus, the transmitter 130 transmits the S-wave infrared light as the optical signal to the detection region because the P-wave component is blocked by the polarizing plate 134. The transmitter 130 transmits the optical signal of the S-wave infrared light.

The receiver 140 includes a beam splitter 142, a mirror 144, a first light receiving element 151, and a second light receiving element 152.

The beam splitter 142 splits the light included in the reflected signal into the light of the second polarization formed by the first polarization undergoing the specular reflection and the light of the third polarization that is different from the second polarization. In the example, the beam splitter 142 splits the light included in the reflected signal into the S-wave infrared light and the P-wave infrared light. For example, the beam splitter 142 splits the S-wave and the P-wave by including a polarization-splitting film 142a provided to be tilted substantially 45° with respect to the incident surface and the emission surface, by reflecting the S-wave substantially 90°, and by transmitting the P-wave. Contrary to the description recited above, the S-wave may be transmitted; and the P-wave may be reflected. The configuration of the beam splitter 142 may be any configuration that can split the S-wave and the P-wave.

The mirror 144 includes a reflective surface that opposes the emission surface of the S-wave of the beam splitter 142 and is tilted substantially 45° with respect to the emission surface of the S-wave of the beam splitter 142. The mirror 144 orients the S-wave infrared light in substantially the same direction as the P-wave infrared light passing through the beam splitter 142 by further reflecting the S-wave infrared light emitted from the beam splitter 142 substantially 90°.

The first light receiving element 151 receives the S-wave infrared light reflected by the mirror 144. The second light receiving element 152 receives the P-wave infrared light passing through the beam splitter 142.

The first light receiving element 151 and the second light receiving element 152 are provided inside one package 154. In other words, the first light receiving element 151 and the second light receiving element 152 are an array sensor (an infrared array sensor). The light receiving surface of the second light receiving element 152 is oriented in substantially the same direction as the light receiving surface of the first light receiving element 151. Thus, the first light receiving element 151 and the second light receiving element 152 are formed not as separate bodies but as one unit.

The first light receiving element 151 and the second light receiving element 152 may be separate bodies. In such a case, the first light receiving element 151 may be disposed on the emission surface side of the S-wave of the beam splitter 142; and the second light receiving element 152 may be provided on the emission surface side of the P-wave of the beam splitter 142. In such a case, the mirror 144 can be omitted.

The receiver 140 outputs, to the controller 20, the received signal corresponding to the light reception amount of the first light receiving element 151 and the light reception amount of the second light receiving element 152. For example, the receiver 140 outputs, to the controller 20, a first light reception signal corresponding to the light reception amount of the first light receiving element 151 and a second light reception signal corresponding to the light reception amount of the second light receiving element 152. Thereby, the light reception amount of the first light receiving element 151 and the light reception amount of the second light receiving element 152 each can be recognized by the controller 20. The form of the received signal is not limited to that recited above and may be any form in which the light reception amount of the first light receiving element 151 and the light reception amount of the second light receiving element 152 each can be recognized by the controller 20.

As illustrated in FIG. 5A, in the case where the optical signal is reflected by the diffuse reflection object 2a, the S-wave component included in the reflected signal is incident on the first light receiving element 151 via the beam splitter 142 and the mirror 144. Then, the P-wave component included in the reflected signal is incident on the second light receiving element 152 via the beam splitter 142.

On the other hand, as illustrated in FIG. 5B, the case where the optical signal is reflected by the specular reflection object 2b is a state in which the reflected signal is substantially only the S-wave. Accordingly, the infrared light is incident on only the first light receiving element 151; and the infrared light substantially is not incident on the second light receiving element 152.

The controller 20 determines the light reception amount of the first light receiving element 151 based on a first received signal and determines the light reception amount of the second light receiving element 152 based on a second received signal.

The controller 20 determines that the optical signal undergoes a specular reflection in the case where the light reception amount of the first light receiving element 151 is not less than the first threshold and the light reception amount of the second light receiving element 152 is less than the second threshold. In other words, in the case where the light reception amount of the P-wave is small with respect to the light reception amount of the S-wave, it is determined to be specular reflection. Thereby, the erroneous water discharge due to the specularly reflected light can be suppressed.

The controller 20 determines that the optical signal undergoes a diffuse reflection in the case where the light reception amount of the second light receiving element 152 is not less than the second threshold. In other words, in the case where the light reception amount of the P-wave increases, it is determined to be the diffuse reflection. Thereby, the detecting of the object such as the hand of the human body, etc., is possible. By appropriately setting the second threshold, the erroneous water discharge in the case where the optical signal undergoes the diffuse reflection by the ceramic wash basin 11, etc., also can be suppressed.

For example, the controller 20 determines that there is no object in the case where the light reception amounts of the first light receiving element 151 and the second light receiving element 152 each are less than the threshold. It is determined that there is an object in the case where the light reception amounts of the first light receiving element 151 and the second light receiving element 152 each are not less than the threshold. For example, it may be determined that there is an object in the case where the light reception amount of the second light receiving element 152 is not less than the second threshold. Or, the existence or absence of the object may be detected using only the light reception amount of the first light receiving element 151 in the case where the light reception amount of the second light receiving element 152 is not less than the second threshold.

Thus, in the case where the light reception amount of the second light receiving element 152 is not less than the second threshold, the controller 20 performs the detecting of the existence or absence of the object based on at least one of the light reception amount of the first light receiving element 151 or the light reception amount of the second light receiving element 152. The controller 20 detects the reception of the specularly reflected light in the case where the light reception amount of the first light receiving element 151 is not less than the first threshold and the light reception amount of the second light receiving element 152 is less than the second threshold.

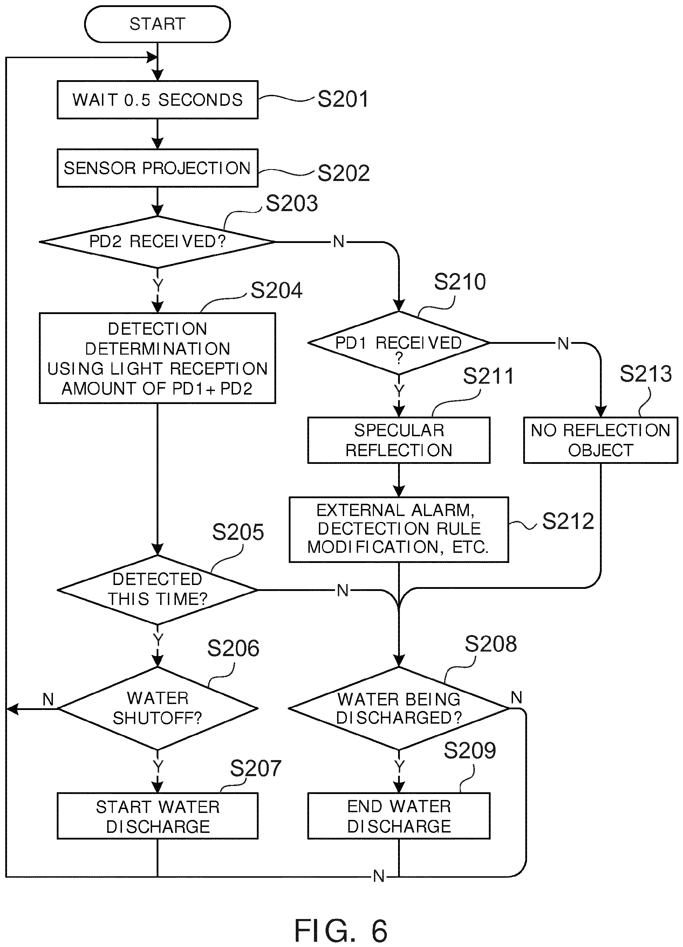

FIG. 6 is a flowchart illustrating the operations of the faucet apparatus according to the second embodiment.

As illustrated in FIG. 6, for example, when the controller 20 of the faucet apparatus 100 starts operating when the power supply is turned on, etc., the controller 20 waits for the prescribed amount of time (step S201 of FIG. 6). The prescribed amount of time is, for example, 0.5 seconds. The standby time is not limited thereto and may be any interval.

After the controller 20 waits for the prescribed amount of time, the controller 20 causes the light-projecting element 132 to project infrared light by supplying a current to the light-projecting element 132 (step S202 of FIG. 6). For example, the controller 20 causes the light-projecting element 132 to project a prescribed number of pulses.

After the prescribed number of pulse light projections are performed, the controller 20 determines whether or not the light reception amount of the second light receiving element 152 is not less than the second threshold based on the received signal input from the receiver 140 (step S203 of FIG. 6).

In the case where it is determined that the light reception amount of the second light receiving element 152 is not less than the second threshold, the controller 20 performs the detection determination based on the total light reception amount of the light reception amount of the first light receiving element 151 and the light reception amount of the second light receiving element 152 (step S204 of FIG. 6).

For example, the controller 20 determines that the object is detected in the case where the total light reception amount is not less than a third threshold. In other words, it is detected that there is an object. The controller 20 determines nondetection in the case where the total light reception amount is less than the third threshold. In other words, it is detected that there is no object. More specifically, the total light reception amount is the total of the cumulative sum of the light reception amount of the second light receiving element 152 and the cumulative sum of the light reception amount of the first light receiving element 151 for the prescribed number of pulse light projections.

The controller 20 determines whether or not the object is detected in this detection operation for the prescribed number of pulse light projections (step S205 of FIG. 6).

In the case where the object is determined to be detected, the controller 20 determines whether or not the water is shutoff (step S206 of FIG. 6).

In the case where it is determined that the water is shutoff, the controller 20 opens the solenoid valve 16, starts the water discharge, and subsequently returns to the processing of step S201 (step S207 of FIG. 6). On the other hand, in the case where it is determined that the water is being discharged in step S206, the controller 20 returns as-is to the processing of step S201.

In the case where the nondetection is determined in step S205, the controller 20 determines whether or not the water is being discharged (step S208 of FIG. 6).

In the case where it is determined that the water is being discharged, the controller 20 closes the solenoid valve 16, ends the water discharge, and subsequently returns to the processing of step S201 (step S209 of FIG. 6). On the other hand, in the case where it is determined that the water is shutoff in step S208, the controller 20 returns as-is to the processing of step S201.

In the case where it is determined that the light reception amount of the second light receiving element 152 is less than the second threshold in step S203, the controller 20 performs the prescribed number of pulse light projections and subsequently determines whether or not the light reception amount of the first light receiving element 151 is not less than the first threshold based on the received signal input from the receiver 140 (step S210 of FIG. 6).

In the case where it is determined that the light reception amount of the first light receiving element 151 is not less than the first threshold, the controller 20 detects the reception of the specularly reflected light (step S211 of FIG. 6). In the case where the controller 20 detects the reception of the specularly reflected light, various safety operations such as an external alarm, modifying the detection rules, etc., are executed.

For example, a notification part that is not illustrated in the faucet apparatus 100 is provided; and the reception of the specularly reflected light is notified to the user, etc., by operating the notification part according to the detection of the reception of the specularly reflected light. The notification part is, for example, a light-emitting element that performs the notification using light, a speaker that performs the notification using voice, etc. The form of the notification by the notification part may be any form that can provide the notification to the user. For example, in the case where the reception of the specularly reflected light is detected, the notification may be performed by performing the water discharge of a prescribed water discharge pattern. In such a case, in the faucet apparatus 100, it is unnecessary to separately provide the notification part.

For example, in the case where the reception of the specularly reflected light is detected, the controller 20 modifies the detection rules to perform the detection determination by using only the light reception amount of the second light receiving element 152 without using the light reception amount of the first light receiving element 151 in the detection determination of step S204. Thereby, even in the case where the specularly reflected light is received, the water discharge and shutoff can be controlled appropriately. Or, in the case where the reception of the specularly reflected light is detected, the detection rules may be modified so that the water discharge is not performed.

After the execution of the safety operation is performed, the controller 20 proceeds to the processing of step S208 and ends the water discharge as necessary.

In step S210, the controller 20 determines that there is no reflection object in the case where it is determined that the light reception amount of the first light receiving element 151 is less than the first threshold (step S213 of FIG. 6). In other words, it is determined that the reflected signal is not received. Subsequently, the controller 20 proceeds to the processing of step S208 and ends the water discharge as necessary.

The controller 20 repeats the processing recited above. Thereby, in the faucet apparatus 100, the water discharge from the water discharge port 13a is started automatically by the user causing the hand, etc., to approach the water discharge port 13a; and the water discharge from the water discharge port 13a is ended by the user moving the hand, etc., away from the water discharge port 13a.

In the faucet apparatus 100 according to the embodiment, in the receiver 140, the first light receiving element 151 receives the S-wave infrared light, and the second light receiving element 152 receives the P-wave infrared light; and the controller 20 detects the existence or absence of the object based on the light reception amount of the first light receiving element 151 and the light reception amount of the second light receiving element 152. Thereby, compared to the case where light of one polarization is received by one light receiving element using a polarizing plate transmitting only the light of the one polarization, more of the light diffusely reflected by the object can be received.

For example, in the configuration in which the two polarizing plates are used, the intensity of the light attenuates about 50% on the transmitting side, and attenuates about 50% further on the receiving side; and the intensity of the light received by the light receiving element undesirably attenuates to about 25% of that when transmitted. Conversely, in the faucet apparatus 100, in the case of the diffuse reflection, the infrared light that is attenuated to about 25% is received by the first light receiving element 151 and the second light receiving element 152 each; and by determining the total light reception amount of the first light receiving element 151 and the second light receiving element 152, the intensity of the infrared light received by the receiver 140 can be about 50% of that when transmitted. Compared to the configuration using the two polarizing plates, the power consumption of the light-projecting element 132 can be reduced to about 1/2. In other words, the light emission intensity that is necessary at the light-projecting element 132 can be reduced to about 1/2. Therefore, compared to the case where the two polarizing plates are used, the intensity of the light necessary when transmitting is reduced; and the increase of the power consumption can be suppressed.

In the case where the optical signal undergoes the specular reflection, the reflected signal is the S-wave infrared light. Therefore, the detecting of the specular reflection also can be performed based on the light reception amount of the first light receiving element 151. Accordingly, a faucet apparatus 100 that is excellent for power consumption reduction can be provided while suppressing the erroneous water discharge due to the specular reflection.

In the faucet apparatus 100, the number of parts can be low because the first light receiving element 151 and the second light receiving element 152 are formed as one unit. For example, the faucet apparatus 100 can be downsized further.

In the faucet apparatus 100, in the case where the light reception amount of the second light receiving element 152 is not less than the prescribed threshold, the controller 20 performs the detecting of the existence or absence of the object based on at least one of the light reception amount of the first light receiving element 151 or the light reception amount of the second light receiving element 152; therefore, the controller 20 can appropriately detect the existence or absence of the object by using the diffuse reflection while suppressing the erroneous water discharge due to the specular reflection.

In the faucet apparatus 100, in the case where the light reception amount of the first light receiving element 151 is not less than the first threshold and the light reception amount of the second light receiving element 152 is less than the second threshold, the controller 20 detects the reception of the specularly reflected light; therefore, it is possible to execute various safety operations such as a water shutoff operation, an external alarm, etc. Thereby, the erroneous water discharge due to the specular reflection can be suppressed more appropriately.

### Third embodiment

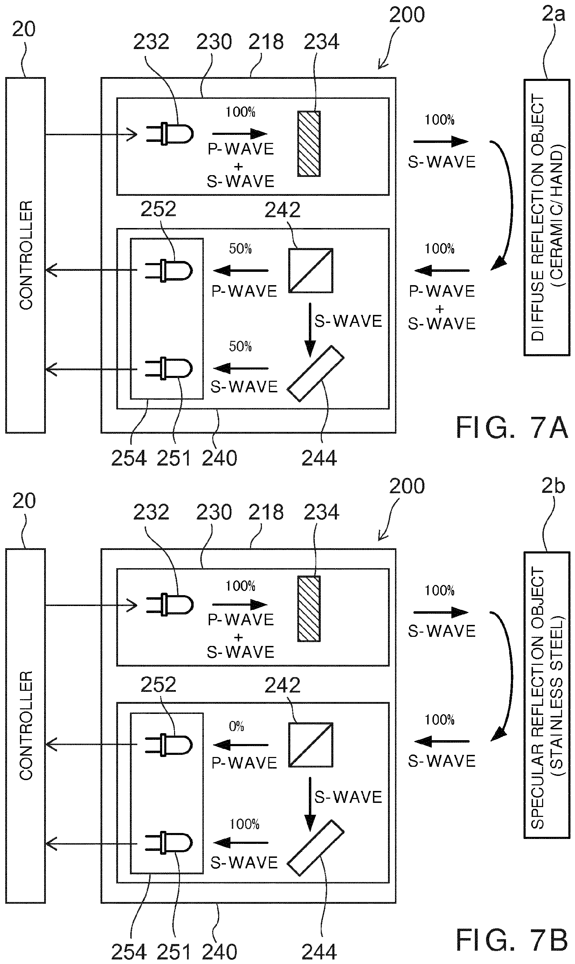

FIG. 7A and FIG. 7B are block diagrams illustrating a portion of a faucet apparatus according to a third embodiment.

As illustrated in FIG. 7A and FIG. 7B, a sensor 218 of the faucet apparatus 200 includes a transmitter 230 and a receiver 240. Similarly to the embodiments recited above, FIG. 7A illustrates the case where the optical signal transmitted from the sensor 218 is reflected by diffuse reflection object 2a; and FIG. 7B illustrates the case where the optical signal transmitted from the sensor 218 is reflected by the specular reflection object 2b.

The transmitter 230 includes the light-projecting element 132 and a polarization conversion element 234. The receiver 240 includes a beam splitter 242, a mirror 244, a first light receiving element 251, and a second light receiving element 252. The first light receiving element 251 and the second light receiving element 252 are provided inside one package 254 and are formed as one unit.

In the faucet apparatus 200, the transmitter 230 is substantially the same as the transmitter 30 of the faucet apparatus 10 described in reference to the first embodiment. The receiver 240 is substantially the same as the receiver 140 of the faucet apparatus 100 described in reference to the second embodiment. Accordingly, a detailed description is omitted for the transmitter 230 and the receiver 240. Also, in the faucet apparatus 200, substantially the same operations as the operations described in reference to FIG. 6 can be executed.

In the faucet apparatus 200 according to the embodiment, the attenuation of the infrared light of the transmitter 230 can be suppressed; and more of the light diffusely reflected by the object can be received. For example, the intensity of the infrared light received by the receiver 240 can be about the same as that when transmitting. Compared to the configuration using the two polarizing plates, the power consumption of the light-projecting element 232 can be reduced to about 1/4. In other words, the light emission intensity that is necessary at the light-projecting element 232 can be reduced to about 1/4. Therefore, compared to the case where the two polarizing plates are used, the intensity of the light necessary when transmitting is reduced; and the increase of the power consumption can be suppressed. Accordingly, a faucet apparatus 200 that is excellent for power consumption reduction can be provided while suppressing the erroneous water discharge due to the specular reflection.

### Modifications

Although the non-polarized light is converted into linearly polarized light in the embodiments recited above, the non-polarized light is not limited to linearly polarized light; and similar effects can be obtained by converting into circularly polarized light or elliptically polarized light.

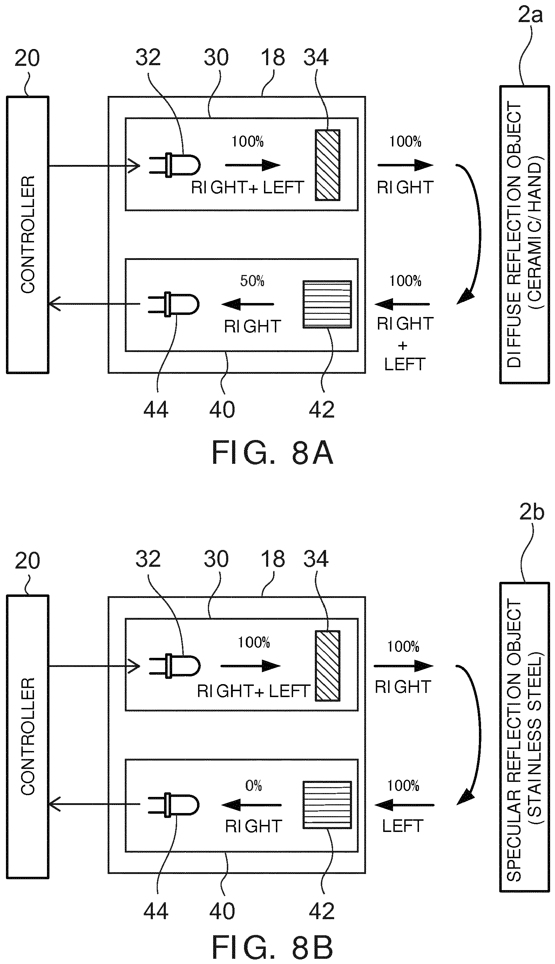

FIG. 8A and FIG. 8B are block diagrams illustrating a modification of the faucet apparatus according to the first embodiment.

Although the polarization conversion element 34 converts the non-polarized light into S-wave linearly polarized light in the first embodiment recited above, the non-polarized light may be converted into right-handed circularly polarized light as illustrated in FIG. 8A and FIG. 8B. In such a case, the polarization conversion element 34 converts the non-polarized light into right-handed circularly polarized light; and it is sufficient for the polarizing plate 42 to have a configuration that transmits the right-handed circularly polarized light and blocks left-handed circularly polarized light. In the example, the right-handed circular polarization corresponds to the first polarization and the third polarization; and the left-handed circular polarization corresponds to the second polarization.

In the case where the light converted into the right-handed circular polarization by the polarization conversion element 34 undergoes diffuse reflection due to the diffuse reflection object 2a, the polarized component is disturbed; and the state becomes a state in which components of right-handed circularly polarized light and left-handed circularly polarized light coexist. Then, the polarizing plate 42 transmits only the right-handed circular polarization component of the reflected light to be incident on the light receiving element 44. On the other hand, in the case of specular reflection, when the light converted into the right-handed circularly polarized light undergoes specular reflection due to the specular reflection object 2b, the phase reverses to become left-handed circularly polarized light. Then, the reception of the left-handed circularly polarized light by the light receiving element 44 is suppressed because the polarizing plate 42 blocks the left-handed circularly polarized light. Accordingly, in the example as well, similarly to the first embodiment recited above, a faucet apparatus that is excellent for power consumption reduction can be provided while suppressing the erroneous water discharge due to the specular reflection.

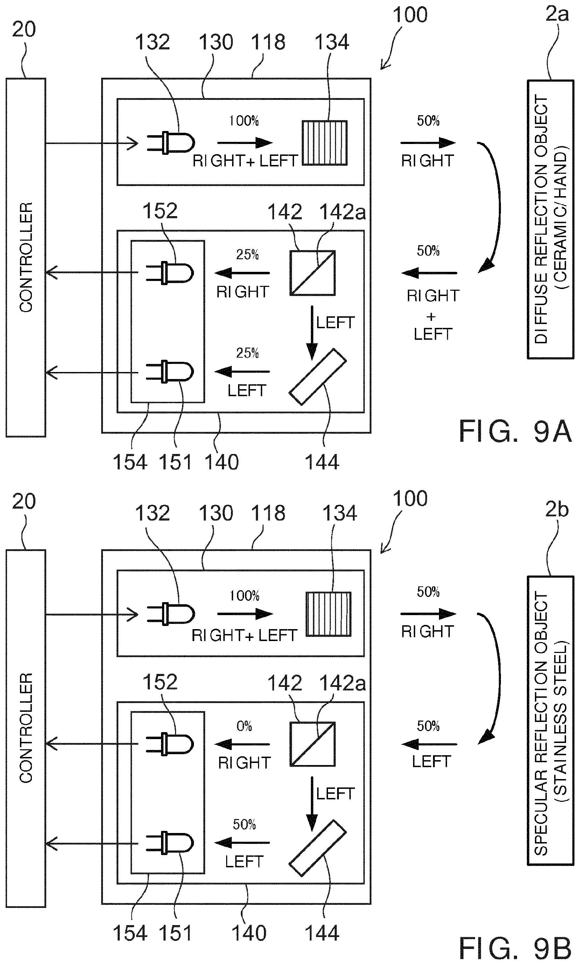

FIG. 9A and FIG. 9B are block diagrams illustrating a modification of the faucet apparatus according to the second embodiment.

Although the beam splitter 142 splits the non-polarized light into the S-wave and the P-wave in the second embodiment, the non-polarized light may be split into right-handed circularly polarized light and left-handed circularly polarized light as illustrated in FIG. 9A and FIG. 9B. In such a case, it is sufficient for the polarizing plate 134 to have a configuration in which the right-handed circularly polarized light is transmitted and the left-handed circularly polarized light is blocked.

In the case where the light converted into the right-handed circularly polarized light by the polarizing plate 134 undergoes diffuse reflection due to the diffuse reflection object 2a, the polarized component is disturbed; and the state becomes a state in which the components of right-handed circularly polarized light and left-handed circularly polarized light coexist. In the beam splitter 142, the non-polarized light is incident and is split into right-handed circularly polarized light and left-handed circularly polarized light. Then, the left-handed circularly polarized light is incident on the first light receiving element 151; and the right-handed circularly polarized light is incident on the second light receiving element 152. On the other hand, in the case of the specular reflection, when the light converted into the right-handed circularly polarized light undergoes specular reflection due to the specular reflection object 2b, the phase is reversed to become left-handed circularly polarized light. Then, the light is incident on only the first light receiving element 151; and the light is not incident on the second light receiving element 152. Accordingly, in the example as well, effects similar to those of the second embodiment recited above can be obtained.

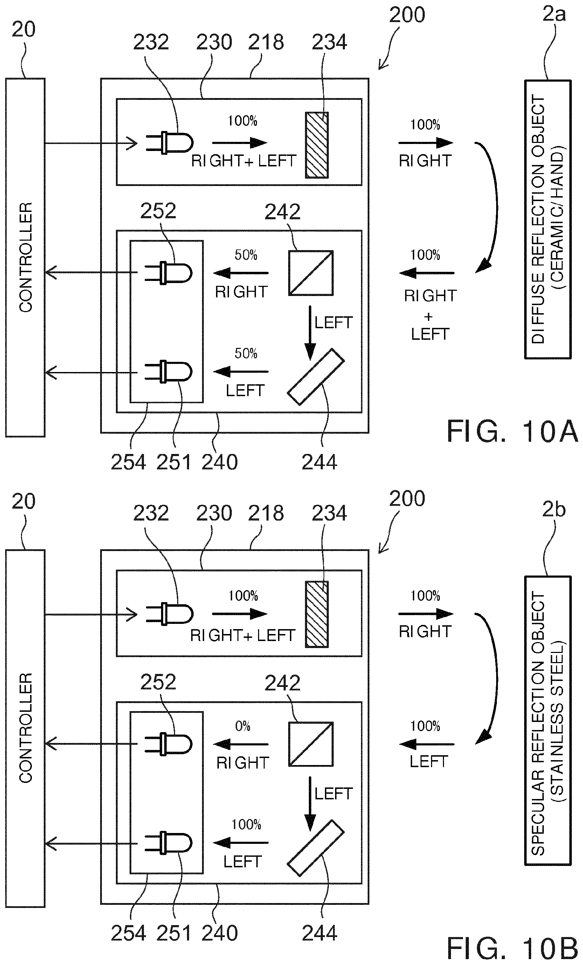

FIG. 10A and FIG. 10B are block diagrams illustrating a modification of the faucet apparatus according to the third embodiment.

As described above, the transmitter 30 described in reference to the first embodiment and the receiver 140 described in reference to the second embodiment are substantially the same as those of the third embodiment. Accordingly, as illustrated in FIG. 10A and FIG. 10B, even in the case where the S-wave linearly polarized light is replaced with right-handed circularly polarized light, effects similar to those of the third embodiment recited above can be obtained.

Also, similar effects can be obtained even in the case where the circular polarization described above is replaced with elliptical polarization (right-handed elliptical polarization and left-handed elliptical polarization).

The embodiments of the invention have been described above. However, the invention is not limited to the above description. Those skilled in the art can appropriately modify the design of the above embodiments. Such modifications are also encompassed within the scope of the invention as long as they include the features of the invention. For instance, the shape, dimension, material, and placement of each element of the faucet apparatus 10, 100, 200 are not limited to those illustrated above, but can be appropriately modified.

Furthermore, the elements of the above embodiments can be combined with each other as long as technically feasible. Such combinations are also encompassed within the scope of the invention as long as they include the features of the invention.

## Claims

1. A faucet apparatus, comprising:
a water discharger having a water discharge port discharging water;
a water supply path guiding the water from a water supply source to the water discharge port;
an opening/closing valve opening and closing the water supply path;
a transmitter transmitting an optical signal;
a receiver receiving a reflected signal of the optical signal and outputting a received signal corresponding to the reflected signal; and
a controller detecting an existence or absence of an object based on the received signal, and controlling opening and closing of the opening/closing valve according to a detection result of the object,
the transmitter including
a light-projecting element projecting non-polarized light, and
a polarization conversion element converting the non-polarized light projected from the light-projecting element into light of a first polarization,
the optical signal transmitted by the transmitter being of the light of the first polarization,
the receiver including
a polarizing member blocking light of a second polarization of the light included in the reflected signal and transmitting light of a third polarization of the light included in the reflected signal, the light of the second polarization being formed by the light of the first polarization undergoing a specular reflection, the third polarization being different from the second polarization, and
a light receiving element receiving the light of the third polarization passing through the polarizing member,
the receiver outputting, to the controller, the received signal corresponding to a light reception amount of the light receiving element.

2. A faucet apparatus, comprising:
a water discharger having a water discharge port discharging water;
a water supply path guiding the water from a water supply source to the water discharge port;
an opening/closing valve opening and closing the water supply path;
a transmitter transmitting an optical signal;
a receiver receiving a reflected signal of the optical signal and outputting a received signal corresponding to the reflected signal; and
a controller detecting an existence or absence of an object based on the received signal, and controlling opening and closing of the opening/closing valve according to a detection result of the object,
the transmitter including
a light-projecting element projecting non-polarized light, and
a polarizing member transmitting light of a first polarization included in the non-polarized light and blocking light of a polarization different from the first polarization,
the optical signal transmitted by the transmitter being of the light of the first polarization,
the receiver including
a beam splitter splitting the light included in the reflected signal into light of a second polarization and light of a third polarization, the light of the second polarization being formed by the light of the first polarization undergoing a specular reflection, the third polarization being different from the second polarization,
a first light receiving element receiving the light of the second polarization split by the beam splitter, and
a second light receiving element receiving the light of the third polarization split by the beam splitter,
the receiver outputting, to the controller, the received signal corresponding to a light reception amount of the first light receiving element and a light reception amount of the second light receiving element.

3. A faucet apparatus, comprising:
a water discharger having a water discharge port discharging water;
a water supply path guiding the water from a water supply source to the water discharge port;
an opening/closing valve opening and closing the water supply path;
a transmitter transmitting an optical signal;
a receiver receiving a reflected signal of the optical signal and outputting a received signal corresponding to the reflected signal; and
a controller detecting an existence or absence of an object based on the received signal, and controlling opening and closing of the opening/closing valve according to a detection result of the object,
the transmitter including
a light-projecting element projecting non-polarized light, and
a polarization conversion element converting the non-polarized light projected from the light-projecting element into light of a first polarization,
the optical signal transmitted by the transmitter being of the light of the first polarization,
the receiver including
a beam splitter splitting the light included in the reflected signal into light of a second polarization and light of a third polarization, the light of the second polarization being formed by the light of the first polarization undergoing a specular reflection, the third polarization being different from the second polarization,
a first light receiving element receiving the light of the second polarization split by the beam splitter, and
a second light receiving element receiving the light of the third polarization split by the beam splitter,
the receiver outputting, to the controller, the received signal corresponding to a light reception amount of the first light receiving element and a light reception amount of the second light receiving element.

4. The apparatus according to claim 1, wherein the controller performs the detecting of the existence or absence of the object by using only a component of the third polarization without using a component of the second polarization.

5. The apparatus according to claim 2, wherein the first light receiving element and the second light receiving element are formed as one unit.

6. The apparatus according to claim 2 or 5, wherein the controller performs the detecting of the existence or absence of the object based on at least one of the light reception amount of the first light receiving element or the light reception amount of the second light receiving element in the case where the light reception amount of the second light receiving element is not less than a prescribed threshold.

7. The apparatus according to any one of claims 2, 5 and 6, wherein the controller detects a reception of specularly reflected light in the case where the light reception amount of the first light receiving element is not less than a first threshold and the light reception amount of the second light receiving element is less than a second threshold.

8. The apparatus according to claim 3, wherein the first light receiving element and the second light receiving element are formed as one unit.

9. The apparatus according to claim 3 or 8, wherein the controller performs the detecting of the existence or absence of the object based on at least one of the light reception amount of the first light receiving element or the light reception amount of the second light receiving element in the case where the light reception amount of the second light receiving element is not less than a prescribed threshold.

10. The apparatus according to any one of claims 3, 8 and 9, wherein the controller detects a reception of specularly reflected light in the case where the light reception amount of the first light receiving element is not less than a first threshold and the light reception amount of the second light receiving element is less than a second threshold.
